(19) Europäisches Patentamt
European Patent Office
Office européen des brevets

(11) **EP 4 495 834 A1**

(12) **EUROPEAN PATENT APPLICATION**

(43) Date of publication:
**22.01.2025 Bulletin 2025/04**

(21) Application number: **24152756.3**

(22) Date of filing: **19.01.2024**

(51) International Patent Classification (IPC):
**G06N 3/098** (2023.01)   **G06N 3/084** (2023.01)

(52) Cooperative Patent Classification (CPC):
**G06N 3/084; G06N 3/098**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.07.2023 KR 20230094737**

(71) Applicants:
• **Samsung Electronics Co., Ltd.**
  **Suwon-si, Gyeonggi-do 16677 (KR)**
• **Seoul National University R&DB Foundation**
  **Seoul 08826 (KR)**

(72) Inventors:
• **Lee, Jongwook**
  **16678 Suwon-si, Gyeonggi-do (KR)**
• **Lee, Kyung Han**
  **08826 Seoul (KR)**
• **Han, Sang Hyun**
  **08782 Seoul (KR)**
• **Han, Tae Kyoung**
  **08786 Seoul (KR)**
• **Hong, Young Jun**
  **16678 Suwon-si, Gyeonggi-do (KR)**

(74) Representative: **Grünecker Patent- und
Rechtsanwälte
PartG mbB
Leopoldstraße 4
80802 München (DE)**

(54) **METHOD AND APPARATUS WITH DISTRIBUTED TRAINING OF NEURAL NETWORK**

(57) A processor-implemented method includes: while training a neural network (NN) using a current training mode selected from a plurality of training modes for training of the NN, measuring time data of a plurality of sub-operations for the training of the NN; based on the time data, determining a computation time to perform computation operations among the plurality of sub-operations and a communication time to perform communication operations among the plurality of sub-operations; based on a comparison result of the computation time and the communication time, selecting a next training mode from the plurality of training modes; and training the NN based on the next training mode.

FIG. 1

Processed by Luminess, 75001 PARIS (FR)

EP 4 495 834 A1

## EP 4 495 834 A1

**Description**

BACKGROUND

1. Field

The following description relates to a method and apparatus with distributed training of a neural network.

2. Description of Related Art

Distributed training is a method that may include performing training using multiple computing resources to handle large data sets and complex model architectures. The distributed training may accelerate a training speed by splitting the entire data set into parts and processing each part in parallel. In the distributed training, calculations may be simultaneously performed on multiple computing devices or processing nodes (e.g., graphic processing units (GPUs), neural processing units (NPUs), etc.), and data and model parameters may be efficiently shared among them. Each device may perform gradient descent on a partial data set, calculate a gradient, and update the model parameter by communicating with other devices. The above process may be repeated several times to complete the training for the entire data set.

SUMMARY

The invention is what is claimed in the independent claims. Preferred embodiments are specified in the dependent claims.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one or more general aspects, a processor-implemented method includes: while training a neural network (NN) using a current training mode selected from a plurality of training modes for training of the NN, measuring time data of a plurality of sub-operations for the training of the NN; based on the time data, determining a computation time to perform computation operations among the plurality of sub-operations and a communication time to perform communication operations among the plurality of sub-operations; based on a comparison result of the computation time and the communication time, selecting a next training mode from the plurality of training modes; and training the NN based on the next training mode.

The plurality of training modes may be distinguished from each other according to an update range of the NN by each processing module used for the training of the NN.

The plurality of training modes may include any one or any combination of any two or more of: a first training mode in which full update of a corresponding model of the NN is performed by each of processing modules used for the training of the NN; a second training mode in which partial update of 1/N of the corresponding model is performed by each of the processing modules; and a third training mode in which partial update of 1/M of the corresponding model is performed by each of the processing modules, wherein the N represents a total number of the processing modules, and the M represents an integer greater than 1 and smaller than the N.

The computation time and the communication time based on the time data may be obtained in a training process of a first layer group of the NN using the current training mode, a second layer group of the NN may be trained using the next training mode, and the first layer group may include one or more portions of one or more layers closer to a last layer of the NN than the second layer group.

The plurality of sub-operations may include any one or any combination of any two or more of a backward computation operation related to backward propagation, a gradient communication operation related to sharing of a layer gradient, an update computation operation related to model update, and a parameter communication operation related to sharing of a model parameter.

The determining of the computation time and the communication time may include, based on the time data, recording first temporary data of any one or any combination of any two or more of the backward computation operation, the gradient communication operation, the update computation operation, and the parameter communication operation in a timetable for each layer of the NN.

The determining of the computation time and the communication time further may include: receiving second temporary data of any one or any combination of any two or more of a backward computation operation, a gradient communication operation, an update computation operation, and a parameter communication operation of a plurality of processing modules of another network node from the other network node participating distributed training of the NN; and updating the timetable based on a comparison result of the first temporary data and the second temporary data.

The time data may include a sub-operation type index, an operation start time, an operation completion time, and a training mode index.

The operation start time of the time data may include a start time of workload distribution for each sub-operation of a controller and a start time of workload execution for each sub-operation of processing modules, the operation completion time of the time data may include a completion time of the workload distribution for each sub-operation of the controller and a completion time of the workload execution for each sub-operation of the processing modules, and an operation time of the controller and an operation time of the processing modules for each sub-operation may be distinguished based on the time data.

The selecting of the next training mode may include: in response to a value of the computation time being larger among the computation time and the communication time, selecting the next training mode such that the value of the computation time decreases; and in response to the value of the computation time being larger among the computation time and the communication time, selecting the next training mode such that the value of the computation time increases.

The method may include: predicting a change in total training time according to the next training mode based on dependency between computation operations and communication operations of a plurality of layers of the NN; and in response to the total training time increasing according to the next training mode, selecting an alternative training mode of the next training mode from the plurality of training modes.

In one or more general aspects, a non-transitory computer-readable storage medium stores instructions that, when executed by a processor, configure the processor to perform any one, any combination, or all of operations and/or methods described herein.

In one or more general aspects, an apparatus includes: a controller configured to, while training a neural network (NN) using a current training mode selected from a plurality of training modes for training of the NN, measure time data of a plurality of sub-operations for the training of the NN, based on the time data, determine a computation time to perform computation operations among the plurality of sub-operations and a communication time to perform communication operations among the plurality of sub-operations, based on a comparison result of the computation time and the communication time, select a next training mode from the plurality of training modes, and train the NN based on the next training mode; and processing modules configured to execute workloads corresponding to the plurality of sub-operations.

The plurality of training modes may be distinguished from each other according to an update range of the NN by each processing module used for the training of the NN.

The plurality of training modes may include any one or any combination of any two or more of: a first training mode in which full update of a corresponding model of the NN is performed by each of the processing modules used for the training of the NN; a second training mode in which partial update of 1/N of the corresponding model is performed by each of the processing modules; and a third training mode in which partial update of 1/M of the corresponding model is performed by each of the processing modules, wherein the N represents a total number of the processing modules, and the M represents an integer greater than 1 and smaller than the N.

The plurality of sub-operations may include any one or any combination of any two or more of a backward computation operation related to backward propagation, a gradient communication operation related to sharing of a layer gradient, an update computation operation related to model update, and a parameter communication operation related to sharing of a model parameter, and to determine the computation time and the communication time, the controller may be configured to, based on the time data, record first temporary data of any one or any combination of any two or more of the backward computation operation, the gradient communication operation, the update computation operation, and the parameter communication operation in a timetable for each layer of the NN.

To determine the computation time and the communication time, the controller may be configured to: receive second temporary data of any one or any combination of any two or more of a backward computation operation, a gradient communication operation, an update computation operation, and a parameter communication operation of a plurality of processing modules of another network node from the other network node participating distributed training of the NN; and update the timetable based on a comparison result of the first temporary data and the second temporary data.

To select the next training mode, the controller may be configured to: in response to a value of the computation time being larger among the computation time and the communication time, select the next training mode so that the value of the computation time decreases; and in response to the value of the computation time being larger among the computation time and the communication time, select the next training mode so that the value of the computation time increases.

In one or more general aspects, an apparatus includes: a first network node and a second network node configured to train a neural network (NN), wherein the first network node may include: a controller configured to, while training the NN using a current training mode selected from a plurality of training modes for training of the NN, measure time data of a plurality of sub-operations for the training of the NN, based on the time data, determine a computation time to perform computation operations among the plurality of sub-operations and a communication time to perform communication operations among the plurality of sub-operations, based on a comparison result of the computation time and the communication time, select a next training mode from the plurality of training modes, and train the NN based on the next training mode; and processing modules configured to execute workloads corresponding to the plurality of sub-operations.

To select the next training mode, the controller may be configured to: in response to a value of the computation time being larger among the computation time and the communication time, select the next training mode so that the value of the computation time decreases; and in response to the value of the computation time being larger among the computation time and the communication time, select the next training mode so that the value of the computation time increases.

Other features and aspects will be apparent from the following detailed description, the drawings, and the claims.

BRIEF DESCRIPTION OF THE DRAWINGS

FIG. 1 illustrates an example of a configuration of a training apparatus.
FIG. 2 illustrates an example of a training process to which a distribution process is not applied.
FIGS. 3A to 3D illustrate examples of various training modes used for distributed training.
FIG. 4 illustrates an example of a dependency relationship of sub-operations for training.
FIG. 5 illustrates an example of a dynamic control operation for optimization of distributed training.
FIG. 6 illustrates an example of a specific configuration and a specific operation of a control unit and processing units of a training apparatus.
FIG. 7 illustrates an example of a data processing process by a specific operation of a control unit and processing units.
FIG. 8 illustrates an example of a process of filling a timetable with temporary data.
FIG. 9 illustrates an example of a process of determining data of a timetable.
FIG. 10 illustrates an example of a process of optimizing distributed training by adjusting an computation time and/or a communication time.
FIG. 11 illustrates an example of a distributed training process related to backward propagation.
FIG. 12 illustrates an example of a distributed training process related to a model update engine.
FIG. 13 illustrates an example of a distributed training structure of a plurality of network nodes.
FIG. 14 illustrates an example of a distributed training method.
FIG. 15 illustrates an example of a configuration of an electronic device.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known, after an understanding of the disclosure of this application, may be omitted for increased clarity and conciseness.

Although terms such as "first," "second," and "third," or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish one member, component, region, layer, or section from another member, component, region, layer, or section. Thus, a first member, component, region, layer, or section referred to in the examples described herein may also be referred to as a second member, component, region, layer, or section without departing from the teachings of the examples.

Throughout the specification, when an element is described as "connected to" or "coupled to" another element, it may be directly "connected to" or "coupled to" the other component, or there may be one or more other components intervening therebetween. In contrast, when an element is described as "directly connected to" or "directly coupled to" another element, there can be no other elements intervening therebetween. Likewise, similar expressions, for example, "between" and "immediately between," and "adjacent to" and "immediately adjacent to," are also to be construed in the same way. As used herein, the term "and/or" includes any one and any combination of any two or more of the associated listed items.

The terminology used herein is for describing various examples only and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof. The use of the term "may" herein with respect to an example or embodiment (for example, as to what an example or embodiment may include or implement) means that at least one example or embodiment exists where such a feature is included or implemented, while all examples are not limited thereto.

The phrases "at least one of A, B, and C," "at least one of A, B, or C," and the like are intended to have disjunctive meanings, and these phrases "at least one of A, B, and C," "at least one of A, B, or C," and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art and the disclosure of the present application, and are not to be interpreted in an idealized or overly formal sense unless expressly so defined herein.

Hereinafter, the examples will be described in detail with reference to the accompanying drawings. When describing an example with reference to the accompanying drawings, like reference numerals refer to like elements and a repeated description related thereto will be omitted.

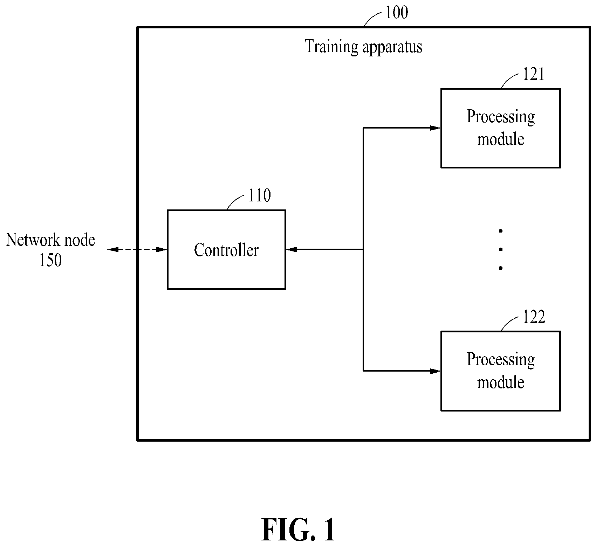

FIG. 1 illustrates an example of a configuration of a training apparatus. Referring to FIG. 1, a training apparatus 100 may include a controller 110 and processing modules 121 to 122 (e.g., two or more processing modules). For example, the controller 110 may be a main processor such as a central processing module (CPU). The processing modules 121 to 122 may be auxiliary processors such as a graphic processing module (GPU) or a neural processing module (NPU). The auxiliary processor may be a computational accelerator.

The controller 110 may perform distributed training of a neural network (NN) using the processing modules 121 to 122. The controller 110 may allocate sub-operations for training of the NN to the processing modules 121 to 122. For example, the sub-operations may include a computation operation and a communication operation. For example, the sub-operations may include at least one of a backward computation operation related to backward propagation, a gradient communication operation related to sharing of a layer gradient, an update computation operation related to a model update, or a parameter communication operation related to sharing of a model parameter.

According to an example, a plurality of training modes may be defined, and distributed training of a network model may be performed based on a training mode selected from the plurality of training modes. A training mode used at a previous time point may be referred to as a previous training mode, a training mode used at a current time point may be referred to as a current training mode, and a training mode to be used at a next time point may be referred to as a next training mode.

The training modes may be distinguished from each other according to an update range of the NN by the processing modules 121 to 122 used for the training of the NN. The training modes may include at least one of a first training mode in which a full update of a corresponding model of the NN is performed by each of the processing modules 121 to 122 used for the training of the NN, a second training mode in which a partial update of 1/N of a corresponding model is performed by each of the processing modules 121 to 122, and a third training mode in which a partial update of 1/M of a corresponding model is performed by each of the processing modules 121 to 122. N may represent the number (e.g., total number or total quantity) of processing modules 121 to 122 and M may represent an integer greater than 1 and smaller than N.

Each of the processing modules 121 to 122 may perform training with a model corresponding to an NN corresponding to a training target. Such a model may be referred to as a corresponding model. A training result of the NN corresponding to the training target may be derived by combining training results of the corresponding models of each of the processing modules 121 to 122.

Different training modes may have different update ranges and different processing patterns. For example, the different training modes may have different ratios of a computation time and a communication time. For example, when the first training mode in which the full update of the corresponding model is performed and the second training mode in which the partial update of 1/N of the corresponding model is performed are used, more computation processing may be performed in the first training mode than in the second training mode and less communication processing may be performed in the first training mode than in the second training mode.

The efficiency of the distributed training may be increased according to balanced use of computational resources and communication resources. When one of these resources is used in a biased manner, as in a typical training apparatus, overall resource utilization may decrease as utilization of the other resource decreases. Thus, according to one or more embodiments, the controller 110 may balance the computation time and the communication time according to training operations by selectively using the training modes having different ratios of the computation time and the communication time. In an example, when a value of the computation time is greater among the computation time and the communication time of the current training mode, the training apparatus 100 may select the next training mode such that the value of the computation time of the next training mode is less than the computation time of the current training mode. When the value of the communication time is greater among the computation time and the communication time of the current training mode, the training apparatus 100 may select the next training mode such that the value of the computation time of the next training mode is greater than the computation time of the current training mode. Alternatively or additionally, when a value of the computation time is greater among the computation time and the communication time of the current training mode, the training apparatus 100 may select the next training mode such that the ratio of computation time to communication time of the next training mode is less than that of the current training mode, and when the value of the communication time is greater among the computation time and the communication time of the current training mode, the training apparatus 100 may select the next training mode such the ratio of computation time to communication time of the next training mode is greater than that of the current training mode. Accordingly, the training apparatus 100 of one or more embodiments may increase efficiency of the distributed training by maintaining the balance between the computation time and the communication time.

According to an example, the training apparatus 100 may measure time data of sub-operations for training of a NN while training the NN using a current training mode selected from a plurality of training modes for the training of the NN, determine (or predict) a computation time to perform computation operations among the sub-operations and a communication time to perform communication operations among the sub-operations based on the time data, select a next training mode from the plurality of training modes based on a result of comparing the computation time and the communication time, and train the NN based on the next training mode.

The current training mode and the next training mode may be applied to different layer groups of the NN. In the training process, a first layer group of the NN may be trained using the current training mode, the computation time and the communication time of the current training mode may be determined based on the time data, and a second layer group of the NN may be trained using the next training mode. A first layer group may include at least a portion of at least one layer closer to a last layer of the NN than the second layer group.

According to an example, the training using a plurality of network nodes may be performed. The training apparatus 100 may be configured with a plurality of network nodes. The training apparatus 100 may correspond to one of a plurality of network nodes. Another network node, for example, a network node 150 may exist in the plurality of network nodes. When the plurality of network nodes is used, a communication cost between the plurality of network nodes may be greater than a communication cost within one network node. When the plurality of network nodes is used, the communication cost may increase since the computational resources increase. In this case, according to examples, the training apparatus 100 of one or more embodiments may increase the efficiency of the computational resources by balancing the computational resources and the communication resources.

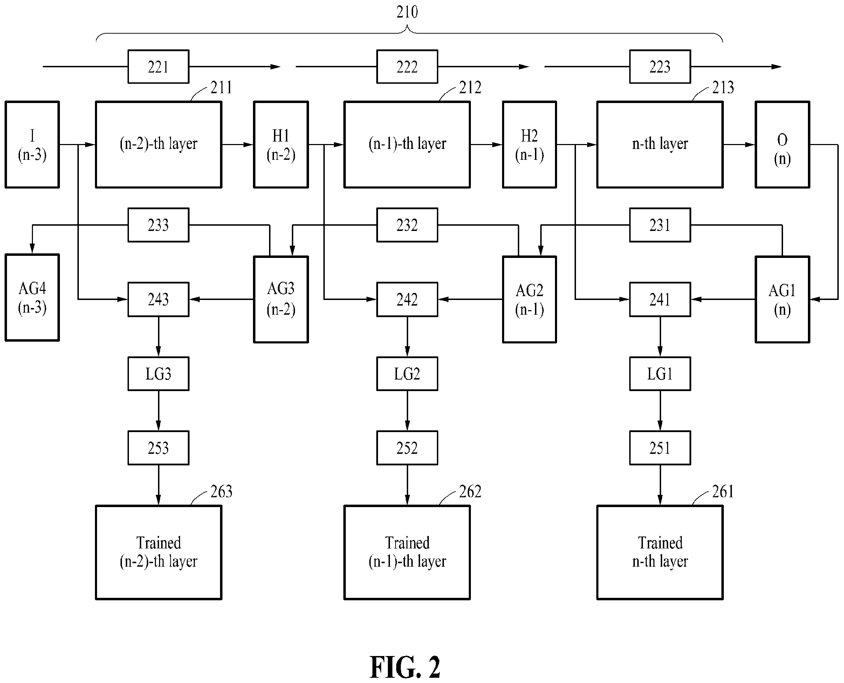

FIG. 2 illustrates an example of a training process to which a distribution process is not applied. Referring to FIG. 2, an NN 210 includes a (n-2)-th layer 211, a (n-1)-th layer 212, and an n-th layer 213. Each of the layers 211, 212, and 213 may include weights, and the weights may be updated during the training process. The weight may also be referred to as a parameter. n may indicate the number of layers of the NN 210. FIG. 2 shows an example where n is 3, but examples are not limited thereto.

For the training of the NN 210, forward propagation operations 221, 222, and 223, computation operations 231, 232, and 233 of an activation gradient, computation operations 241, 242, and 243 of a layer gradient, and model update operations 251, 252, and 253 may be performed. The computation operations 231, 232, and 233 of the activation gradient and the computation operations 241, 242, and 243 of the layer gradient may correspond to backward propagation operations.

The forward propagation operation 221 may generate hidden data H1 by executing the (n-2)-th layer 211 based on input data I. The forward propagation operation 222 may generate hidden data H2 by executing the (n-1)-th layer 212 based on the hidden data H1. The forward propagation operation 223 may generate output data O by executing the n-th layer 213 based on the hidden data H2.

Activation gradient data AG1 may be determined according to a comparison result between the output data O and ground truth GT. The activation gradient data AG1 may correspond to a loss. The computation operation 231 may generate activation gradient data AG2 using the activation gradient data AG1 and the n-th layer 213, the computation operation 232 may generate activation gradient data AG3 using the activation gradient data AG2 and the (n-1)-th layer 212, and the computation operation 233 may generate activation gradient data AG4 using the activation gradient data AG3 and the (n-2)-th layer 211.

The computation operation 241 may generate layer gradient data LG1 using the activation gradient data AG1 and the hidden data H2, the computation operation 242 may generate layer gradient data LG2 using the activation gradient data AG2 and the hidden data H1, and the computation operation 243 may generate layer gradient data LG3 using the activation gradient data AG3 and the input data I. The gradient may be represented by $\Delta W$. W may represent a weight. The well-known term, gradient, may refer to a layer gradient. The layer gradient may simply be referred to as a gradient.

The model update operation 251 may update the weight of the n-th layer 213 based on the layer gradient data LG1, the model update operation 252 may update the weight of the (n-1)-th layer 212 based on the layer gradient data LG2, and the model update operation 253 may update the weight of the (n-2)-th layer 211 based on the layer gradient data LG3. The model update operations 251, 252, and 253 may be represented by $W-(\gamma*\Delta W)$. $\gamma$ may represent a learning rate. A trained n-th layer 261, a trained (n-1)-th layer 262, and a trained (n-2)-th layer 263 may be generated according to the model update operations 251, 252, and 253, respectively.

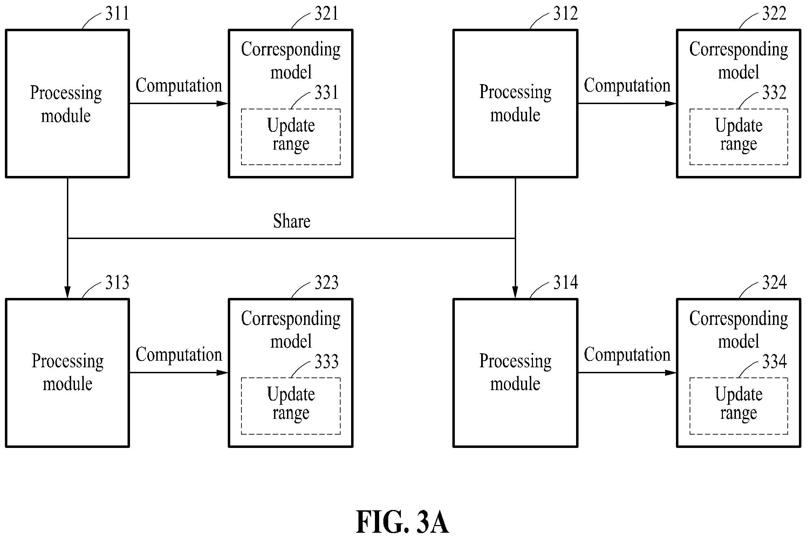

FIGS. 3A to 3D illustrate examples of various training modes used for distributed training. Referring to FIG. 3A, the distributed training using processing modules 311 to 314 may be performed. FIG. 3A shows an example in which four processing modules are used, but examples are not limited thereto. The processing modules 311 to 314 may train corresponding models 321 to 324 of a NN corresponding to a training target.

A large-sized training data set may be prepared for the training of the NN, and sub-data sets of the training data set may be distributed to the processing modules 311 to 314. The processing modules 311 to 314 may train the corresponding models 321 to 324 with different sub-data sets, respectively. The processing modules 311 to 314 may derive different gradients from different sub-data sets, and may share the different gradients. The processing modules 311 to 314 may determine a common gradient (e.g., an average gradient) from the different gradients, and may respectively update the corresponding models 321 to 324 with the common gradient.

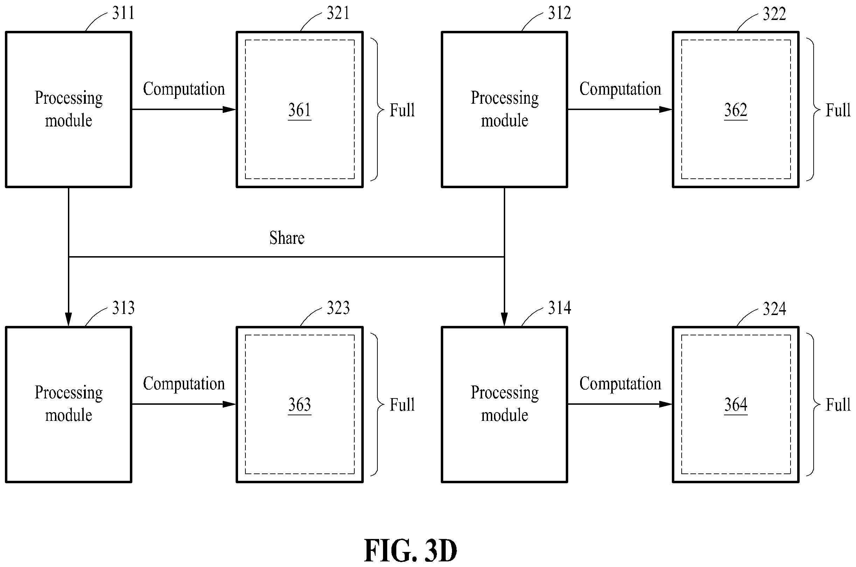

The processing modules 311 to 314 may update the corresponding models 321 to 324 according to update ranges 331 to 334, respectively. For example, when the update ranges 331 to 334 correspond to entire portions of the corresponding models 321 to 324, respectively, the processing modules 311 to 314 may update the entire portions of the corresponding models 321 to 324 with the common gradient. FIG. 3D shows an example in which entire ranges 361 to 364 are set as the update ranges 331 to 334, respectively.

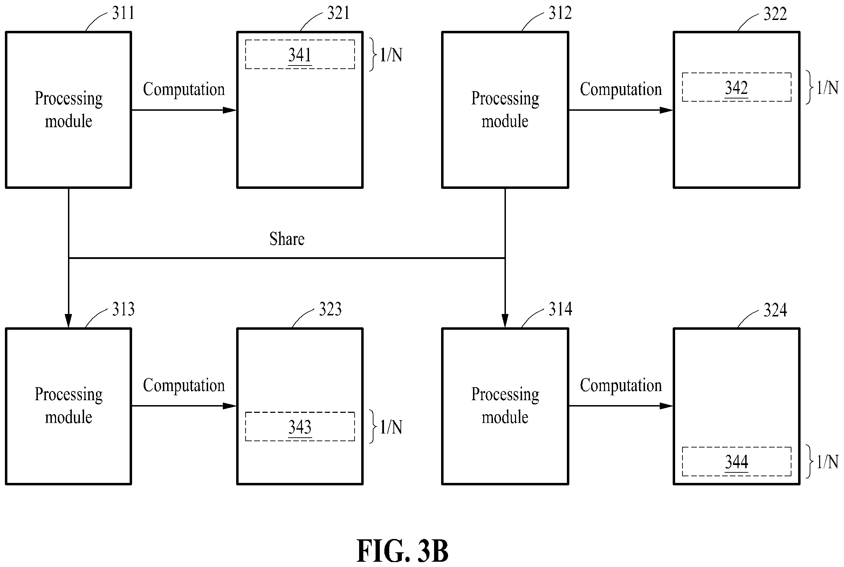

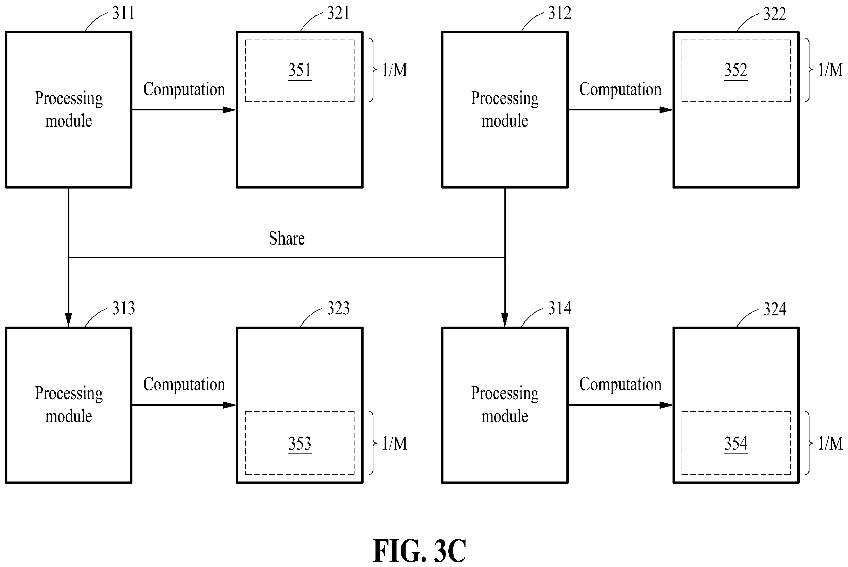

In contrast, when each of the update ranges 331 to 334 corresponds to a portion less than an entirety of each of the corresponding models 321 to 324, the processing modules 311 to 314 may update the portions of the corresponding models 321 to 324 with the common gradient, respectively. FIGS. 3B and 3C show examples in which partial ranges 341 to 344 and 351 to 354 are set as the update ranges 331 to 334.

As shown in FIGS. 3B and 3C, when the update of the partial ranges 341 to 344 and 351 to 354 is performed, at least a portion of each of the processing modules 311 to 314 may update another portion of each of the corresponding models 321 to 324. For example, as shown in FIG. 3B, when the update of the 1/N partial ranges 341 to 344 is performed, the processing modules 311 to 314 may update the other portions of the corresponding models 321 to 324, respectively. N may represent the number of processing modules 311 to 314. For example, when N is 4 and the update of the n-th layer is in progress, the processing modules 311 to 314 each may update different portions of the n-th layer by 1/4 (e.g., the processing modules 311 to 314 each may update a different quarter portion of the n-th layer).

In another example, as shown in FIG. 3C, the update of the 1/M partial ranges 351 to 354 is performed, a first group of the processing modules 311 to 314 may update 1/M of first portions of the corresponding models 321 to 324, and a second group may update 1/M of second portions. M may be an integer greater than "1" and less than "N". For example, when M is 2 and the update of the n-th layer is in progress, the processing modules 311 and 312 in the first group may update 1/M of the first portions of the corresponding models 351 and 352 (e.g., the processing modules 311 and 312 each may update a same half portion of the n-th layer), and the processing modules 313 and 314 in the second group may update 1/M of the second portions of the corresponding models 353 and 354 (e.g., the processing modules 313 and 314 each may update the other half portion of the n-th layer).

When training results (e.g., portions of the trained n-th layer) according to the update of the processing modules 311 to 314 are derived, the processing modules 311 to 314 may share the training results with each other, and combine the training results.

Training methods having different update ranges 331 to 334 as described above may correspond to different training modes. For example, at least one of a first training mode in which the full update of each of the corresponding models 321 to 324 is performed by each of the processing modules 311 to 314, a second training mode in which the partial update of 1/N of each of the corresponding models 321 to 324 is performed by each of the processing modules 311 to 314, or a third training mode in which the partial update of 1/M of each of the corresponding models 321 to 324 is performed by each of the processing modules 311 to 314 may be defined.

Different training modes with different update ranges 331 to 334 may have different amounts of computation and different amounts of communication. For example, in a case of a training mode (e.g., the first training mode) in which the entire portions of the corresponding models 321 to 324 are updated, a relatively large amount of computation may be used to update the entire model. In contrast, in a case of a training mode (e.g., the second training mode or the third training mode) in which the portions of the corresponding models 321 to 324 are updated, a relatively small amount of computation may be used to update the partial model. However, in a case of this training mode, a relatively large amount of communication may be used, since the communication for sharing the training results is used after updating the partial model.

According to the examples, the training apparatus 100 of one or more embodiments may maintain a balance between the amount of computation and the amount of communication through appropriate and selective use of the training modes, and thus, the training apparatus 100 of one or more embodiments may optimize the distributed training.

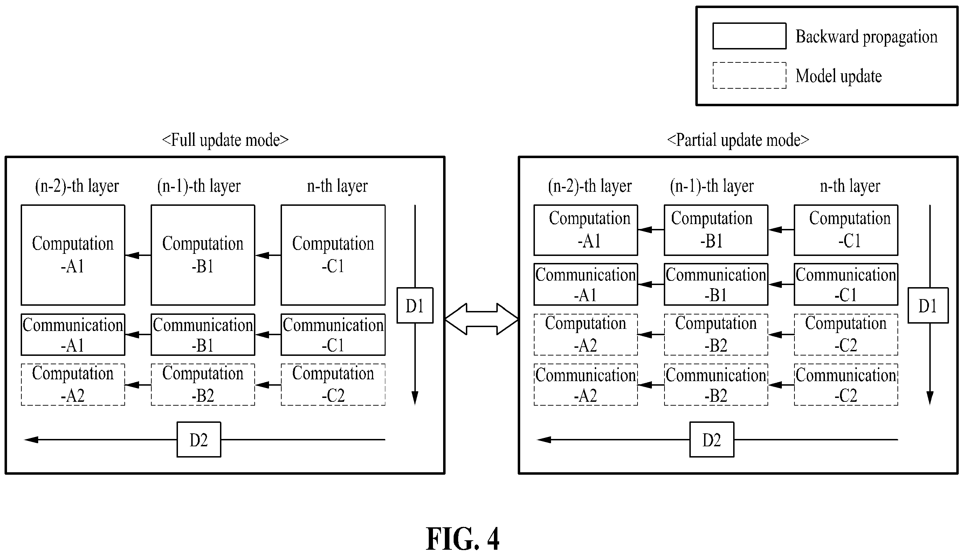

FIG. 4 illustrates an example of a dependency relationship of sub-operations for training. During the training process, forward propagation, computation of an activation gradient, and computation of a layer gradient may be performed. Computation-A1, computation-B1, and computation-C1 in a full update mode and a partial update mode may correspond to the forward propagation, the computation of the activation gradient, and the computation of the layer gradient. When the computation of the layer gradient is completed, each processing module may share the layer gradient. Communication-A1, communication-B1, and communication-C1 in the full update mode and the partial update mode may correspond to communication operations for sharing the layer gradient.

When the sharing of the layer gradient is completed, each processing module may determine a common layer gradient. Computation-A2, computation-B2, and computation-C2 of the full update mode and the partial update mode may correspond to model update operations. Unlike the full update mode, in a case of the partial update mode, the training results may be shared. Communication-A2, communication-B2, and communication-C2 in the partial update mode may correspond to communication operations for sharing the training results.

In the full update mode and the partial update mode, computation-Xk and communication-Xk may be completed in a direction D2. X may be A, B, or C and k may be 1 or 2. A job of a previous layer may be completed to perform a job of a next layer. This may be called layer dependency. Also, in the full update mode, the computation-X1 may be completed to perform the communication-X1, and the communication-X1 may be completed to perform the computation-X2. In the partial update mode, the computation-X1 may be completed to perform the communication-X1, the communication-X1 may be completed to perform the computation-X2, and the computation-X2 may be completed to perform the communication-X2. This may be called job dependency.

According to examples, the training apparatus 100 of one or more embodiments may predict operation times for the sub-operations for the training in consideration of the layer dependency and the job dependency. In contrast, in a typical training apparatus where these layer dependency and job dependency are not considered, prediction accuracy may decrease due to a gap between a predicted operation time and an actual operation time, and thus, optimal distributed training may not be reached.

Considering the layer dependency and the job dependency, the computation-X1 of the backward propagation may be performed by overlapping with the computation-X2 of the model update, and the communication-X1 of the backward propagation may be performed by overlapping with the communication-X2 of the model update. For example, the computation-A1 may be performed by overlapping with the computation-A2, and the communication-A1 may be performed by overlapping with the communication-A2. The training time may be predicted with high accuracy based on such overlapping characteristics.

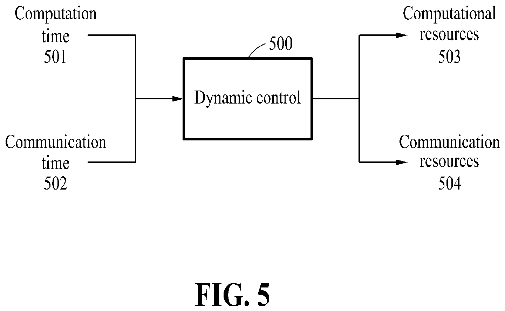

FIG. 5 illustrates an example of a dynamic control operation for optimization of distributed training. Referring to FIG. 5, dynamic control 500 may be performed based on a computation time 501 and a communication time 502 of the sub-operations for the training, and computational resources 503 and communication resources 504 may be used in a balanced way according to the dynamic control 500. The training apparatus 100 of one or more embodiments may thus optimize the distributed training.

Equation 1 and Equation 2 below, for example, may be defined based on the layer dependency, the job dependency, and the overlapping characteristics of the sub-operations.

Equation 1:

$$partial\_opt_i = \begin{cases} c_i^{opt} + n_i^{param} + max(partial\_grad_i, partial\_opt_{i+1}) & \text{if } 0 \leq i < N \\ c_i^{opt} + n_i^{param} + partial\_grad_i & \text{if } i = N \end{cases}$$

Equation 2:

$$partial\_grad_i = \begin{cases} n_i^{grad} + partial\_grad_{i+1} & \text{if } i = 0 \\ max(c_i^{bp}, n_{i+1}^{grad}) + partial\_grad_{i+1} & \text{if } 0 < i < N \\ c_i^{bp} & \text{if } i = N \end{cases}$$

In Equation 1, partial_opt$_i$ represents a completion time of a computation operation and a communication operation for model update of an i-th layer, $c_i^{opt}$ represents a computation time related to the model update of the i-th layer, $n_i^{param}$ represents a communication time related to sharing of a model parameter of the i-th layer, and partial_grad$_i$ represents a completion time of a computation operation and a communication operation for backward propagation of the i-th layer. In Equation 2, $c_i^{bp}$ represents a backward computation time related to the backward propagation of the i-th layer, and $n_i^{grad}$ represents a gradient communication time related to sharing of a layer gradient of the i-th layer. partial_grad$_i$ in Equation 1 is an item placed in consideration of the job dependency, and partial_opt$_{i+1}$ is an item placed in consideration of the layer dependency. partial_grad$_{i+1}$ in Equation 2 is an item placed in consideration of the layer dependency.

A job completion time (JCT) of the training of the NN may be defined as in Equation 3 below.

Equation 3:

$$JCT_{DNN} = partial\_opt_0 + update\_params$$

In Equation 3, $JCT_{DNN}$ represents a JCT of the training of the NN, partial_opt0 represents a completion time of model update of a first layer of the NN, and update_params represents a time used to apply a parameter of a temporary model to a parameter of an actual model. According to an example, update_params may correspond to a constant value. Since model update is performed in a reverse direction, partial_opt0 may refer to a time at which all updates from a last layer to a first layer are completed. update_params is based on a training method of overwriting a parameter of a temporary model with an actual model after the training of the temporary model is completed. When a method of directly training the actual model without the temporary model is used in the training process, update_params may be omitted.

According to examples, the distributed training may be optimized through adjustment of the training mode. The adjustment of the training mode affects the model update, and therefore, $c_i^{opt}$ and $n_i^{param}$ may correspond to targets of the dynamic control 500. As the dynamic control 500 of $c_i^{opt}$ and $n_i^{param}$ affects the computational resources 503, $c_i^{bp}$ and $c_i^{opt}$ may be adjusted, and as it affects the communication resource 504, $n_i^{grad}$ and $n_i^{param}$ may be adjusted. The distributed training may be optimized through the adjustment of $c_i^{bp}$, $c_i^{opt}$, $n_i^{grad}$, and $n_i^{param}$.

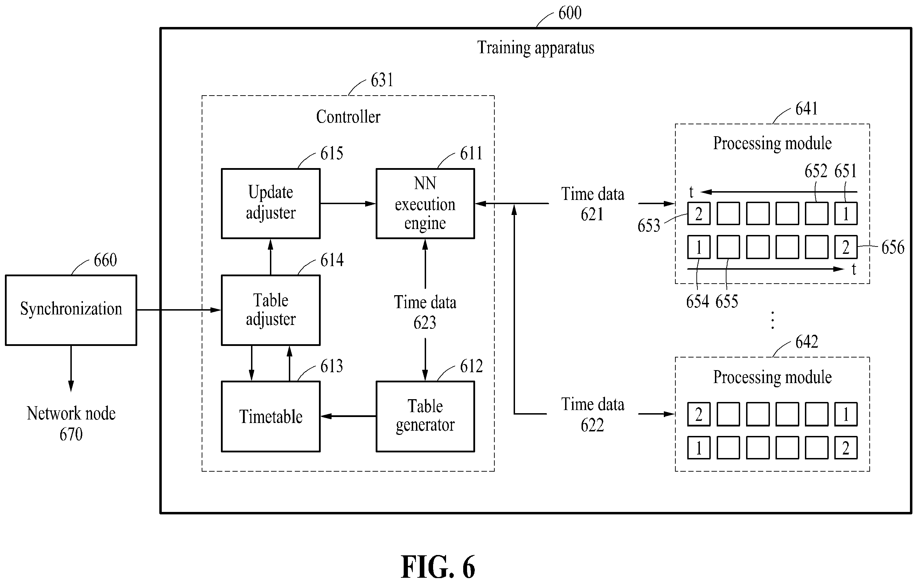

FIG. 6 illustrates an example of a specific configuration and a specific operation of a controller and processing modules of a training apparatus. Referring to FIG. 6, a training apparatus 600 includes a controller 631 and processing modules 641 and 642. The controller 631 may include an NN execution engine 611, a table generator 612, a timetable 613, a table adjuster 614, and an update adjuster 615.

The NN execution engine 611, the table generator 612, the timetable 613, the table adjuster 614, and the update adjuster 615 may be implemented as hardware modules. Operations of the NN execution engine 611, the table generator 612, the timetable 613, the table adjuster 614, and the update adjuster 615 to be described below may correspond to the operations of the controller 631 using these or may correspond to the operations of the controller 631 itself.

The NN execution engine 611 may measure the time of sub-operations of the processing modules 641 and 642 using time data 621 and 622, and time data 623 corresponding to the time data 621 and 622 may correspond to the table generator 612. The time data 621, 622, and 623 may include a sub-operation type index, an operation start time, an operation completion time, and a training mode index. For example, the sub-operation type index may include bits for identifying $c_i^{bp}$, $c_i^{opt}$, $n_i^{grad}$, and $n_i^{param}$. The training mode index may include bits such as a full update mode and a partial update mode (e.g., 1/N update or 1/M update).

The NN execution engine 611 may generate a workload representing a requested operation (e.g., a sub-operation for training) of the processing module 641, and the processing module 641 may execute the corresponding workload. For example, the NN execution engine 611 may generate workloads such as a workload 652 corresponding to sub-operations, a generation start time may be recorded at an operation start time of first time data 651, a generation completion time may be recorded at an operation start time of second time data 653. The processing module 641 may generate results such as a result 655 by executing the workloads corresponding to the sub-operations, an execution start time may be recorded at an operation completion time of the first time data 651, and an execution completion time may be recorded at an operation completion time of the second time data 653.

In this case, an operation time of the controller 631 taken to generate the workloads may be determined by subtracting the operation start time of the first time data 651 from the operation start time of the second time data 653, an operation time of the processing module 641 taken to execute the workloads may be determined by subtracting the operation completion time of the first time data 651 from the operation completion time of the second time data 653, and a total completion time taken to perform the sub-operations of the workloads may be determined by subtracting the operation start time of the first time data 651 from the operation completion time of the second time data 653.

The table generator 612 may generate the timetable 613 based on the time data 623. The table adjuster 614 may adjust the timetable 613 according to synchronization 660. According to an example, a plurality of network nodes may be used to train the NN. In this case, the training apparatus 600 may be one of the plurality of network nodes, and the plurality of network nodes may include another network node, for example, a network node 670. The synchronization 660 between data of the timetable 613 of the training apparatus 600 and data of a timetable of the network node 670 may be used to match speeds of sub-operations.

The timetable 613 may be determined according to the synchronization 660 of the table adjuster 614. The update adjuster 615 may determine a computation time to perform computation operations among the sub-operations and a communication time to perform communication operations among the sub-operations with reference to the timetable 613, and select a next training mode from the training modes based on a comparison result of the computation time and the communication time. The update adjuster 615 may notify the next training mode to the NN execution engine 611, and the NN execution engine 611 may generate a workload according to the next training mode.

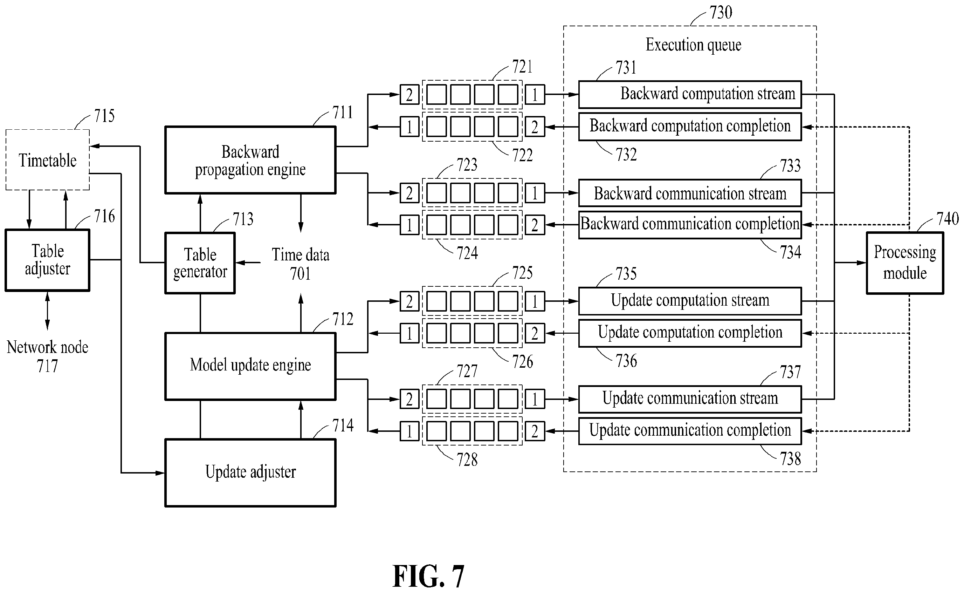

FIG. 7 illustrates an example of a data processing process by a specific operation of a controller and processing modules. Referring to FIG. 7, the NN execution engine 611 of FIG. 6 may be divided into a backward propagation engine 711 and a model update engine 712. However, examples are not limited thereto. The backward propagation engine 711 may generate workloads 721 corresponding to backward computation operations for backward propagation computation. A backward computation stream corresponding to the workloads 721 may be transmitted to an execution queue 730 of a processing module 740. The processing module 740 may execute the workloads 721 through a backward computation stream 731, and generate execution results 722 according to backward computation completion 732. A backward computation time $c_i^{bp}$ for backward propagation of an i-th layer may be determined based on time data according to the workloads 721 and the execution results 722.

The backward propagation engine 711 may generate workloads 723 corresponding to a communication operation for sharing a layer gradient. A backward communication stream corresponding to the workloads 723 may be transmitted to the execution queue 730 of the processing module 740. The processing module 740 may execute the workloads 723 through a backward communication stream 733, and generate execution results 724 according to backward communication completion 734. A gradient communication time $n_i^{grad}$ for sharing the layer gradient of the i-th layer may be determined based on time data according to the workloads 723 and the execution results 724.

The model update engine 712 may generate workloads 725 corresponding to the update computation operation for the model update. An update computation stream corresponding to the workloads 725 may be transmitted to the execution queue 730 of the processing module 740. The processing module 740 may execute the workloads 725 through an update computation stream 735, and generate execution results 726 according to update computation completion 736.

A computation time $c_i^{opt}$ for the model update of the i-th layer may be determined based on time data according to the workloads 725 and the execution results 726.

The model update engine 712 may generate workloads 727 corresponding to a parameter communication operation related to the sharing of the model parameter. An update communication stream corresponding to the workloads 727 may be transmitted to the execution queue 730 of the processing module 740. The processing module 740 may execute the workloads 727 through an update communication stream 737, and generate execution results 728 according to update computation completion 738. A communication time $n_i^{param}$ for the sharing of the model parameter of the i-th layer may be determined based on time data according to the workloads 727 and the execution results 728.

The backward propagation engine 711 and the model update engine 712 may provide time data 701 according to the workloads 721, 723, 725, and 727 and the execution results 722, 724, 726, and 728 to a table generator 713. The table generator 713 may record temporary data of a timetable 715 based on the time data 701. A table adjuster 716 may transmit temporary data of the timetable 715 to another network node, for example, a network node 717. The table adjuster 716 may receive temporary data of the network node 717 from the network node 717. The table adjuster 716 may update the timetable 715 with the temporary data of the network node 717. When data of the timetable 715 is determined according to the update, the table adjuster 716 may notify an update adjuster 714 of the determination of the timetable 715. The update adjuster 714 may adjust the training mode using the timetable 715.

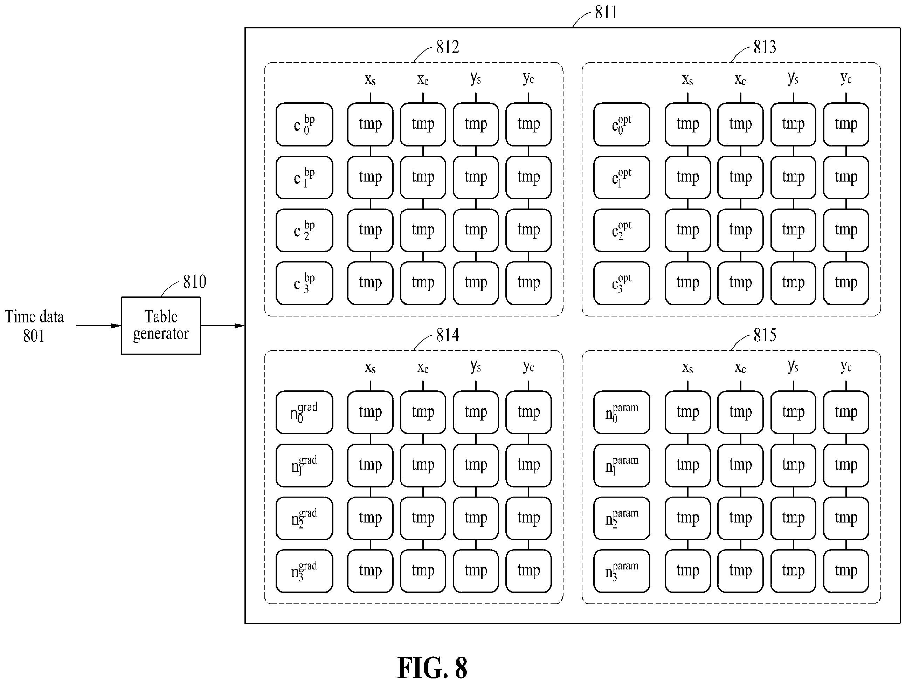

FIG. 8 illustrates an example of a process of filling a timetable with temporary data. Referring to FIG. 8, a table generator 810 may generate a timetable 811 based on time data 801. The timetable 811 may include a section 812 related to a computation time $c_i^{bp}$ of backward propagation, a section 813 related to a communication time $n_i^{grad}$ for sharing of a layer gradient, a section 814 related to a computation time $c_i^{opt}$ of model update, and a section 815 related to a communication time $n_i^{param}$ for sharing of a model parameter. i may represent a layer.

The time data 801 may include a sub-operation type index, an operation start time, an operation completion time, and a training mode index. The timetable 811 may be filled with the operation start time and the operation completion time of the time data 801. $x_s$ may represent an operation start time of a controller, $x_c$ may represent an operation completion time of the controller, $y_s$ may represent an operation start time of a processing module, and $y_c$ may represent an operation completion time of the processing module. Data of the timetable 811 may correspond to temporary data tmp.

The operation start time of the time data 801 may include a start time of workload distribution for each sub-operation of the controller and a start time of workload execution for each sub-operation of the processing modules. The operation completion time of the time data 801 may include a completion time of workload distribution for each sub-operation of the controller and a completion time of workload execution for each sub-operation of the processing modules. An operation time of the controller and an operation time of the processing modules for each sub-operation may be distinguished based on the time data 801. As the operation time of the controller and the operation time of the processing modules are distinguished, detailed adjustment for optimization of the distributed training may be performed.

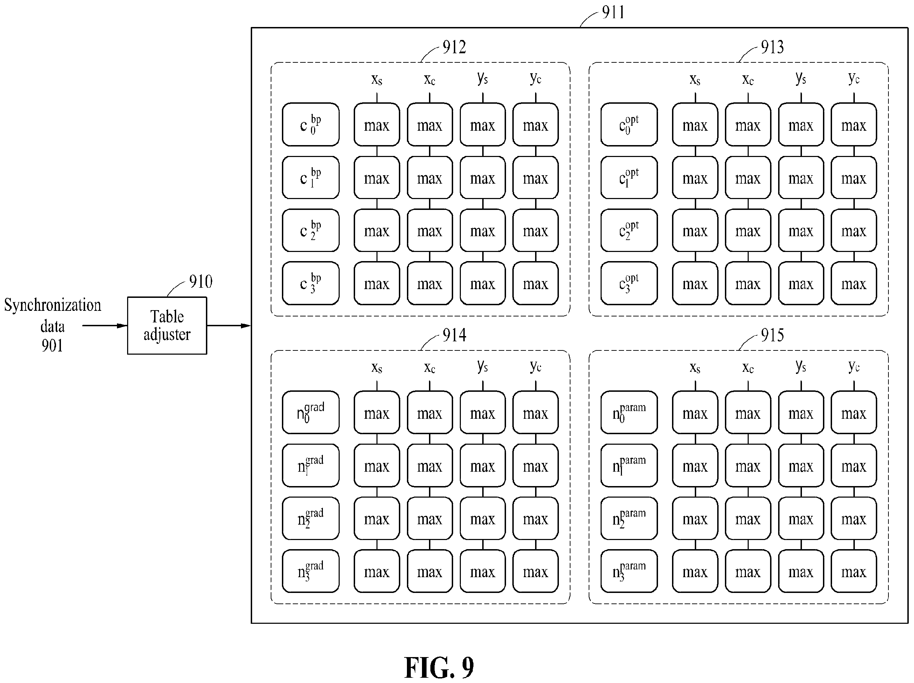

FIG. 9 illustrates an example of a process of determining data of a timetable. Referring to FIG. 9, a table adjuster 910 may update a timetable 911 based on synchronization data 901. The synchronization data 901 may include temporary data of a timetable of another network node. For example, the synchronization data 901 may include an identifier, an operation start time, an operation completion time, and a training mode index of a controller of another network node. The operation start time and operation completion time may correspond to temporary data. For ease of description, temporary data of the timetable 911 may be referred to as first temporary data, and temporary data of a timetable of another network node may be referred to as second temporary data.

Based on time data, the table generator may record the first temporary data of at least one of a backward computation operation, a gradient communication operation, an update computation operation, or a parameter communication operation in the timetable 911 for each layer of the NN. The table adjuster 910 may receive the second temporary data of at least one of a backward computation operation, a gradient communication operation, an update computation operation, or a parameter communication operation of a plurality of processing modules of another network node from the other network node participating the distributed training of the NN, and update the timetable based on a comparison result of the first temporary data and the second temporary data. The table adjuster 910 may record a larger value among the first temporary data and the second temporary data in the timetable 911. When a plurality of network nodes participate in the distributed training, a maximum value of temporary data may be selected because the speeds of the sub-operations of all network nodes need to be matched. The timetable 911 may be filled with final data (max) corresponding to an update result.

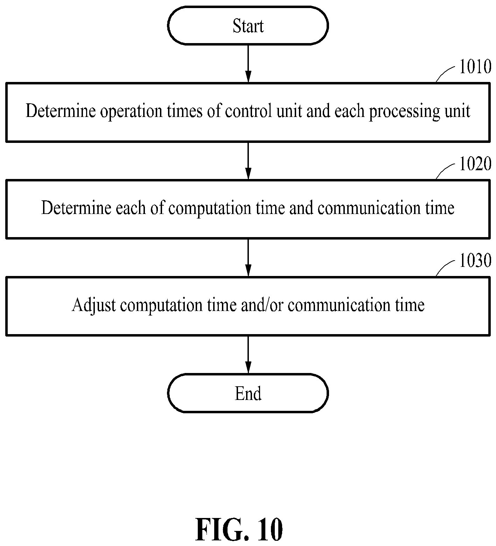

FIG. 10 illustrates an example of a process of optimizing distributed training by adjusting an computation time and/or a communication time. Referring to FIG. 10, in operation 1010, an update adjuster may determine operation times of a controller and each processing module. The update adjuster may determine each workload generation time of the controller and each workload execution completion time of the processing module for backward propagation, gradient sharing, model update, and parameter sharing with reference to an updated timetable.

In operation 1020, the update adjuster may determine each of a computation time and a communication time. The update adjuster may determine each operation time for the backward propagation, the gradient sharing, the model update, and the parameter sharing based on a difference between the workload execution completion time of the processing module and the workload generation time of the controller. In this case, an operation time (net operation time) in which application of pipeline is excluded may be used. The update adjuster may determine a computation time according to a sum of the operation time for the backward propagation and the operation time for the model update. The update adjuster may determine a communication time according to a sum of the operation time for the gradient sharing and the operation time for the parameter sharing.

In operation 1030, the update adjuster may adjust the computation time and/or the communication time. The update adjuster may compare the computation time with the communication time, and when a value of the communication time is larger, the update adjuster may control an NN execution engine so that the communication time decreases, and when the value of the communication time is smaller, the update adjuster may control the NN execution engine so that the communication time increases. For example, when a value of the computation time is larger among the computation time and the communication time, the update adjuster may select a next training mode so that the value of the computation time decreases, and when the value of the computation time is larger among the computation time and the communication time, the update adjuster may select the next training mode so that the value of the computation time increases.

The update adjuster may additionally adjust the training mode based on dynamic control (e.g., the dynamic control 500 of FIG. 5). The update adjuster may predict a change in total training time (e.g., $JCT_{DNN}$) according to the next training mode based on dependency between computation operations and communication operations of a plurality of layers of the NN, and when the total training time increases according to the next training mode, the update adjuster may select an alternative training mode of the next training mode from a plurality of training modes.

When $c_i^{bp}$, $n_i^{grad}$, $c_i^{opt}$, and $n_i^{param}$ obtained using the timetable are applied to Equations 1 to 3 above, the $JCT_{DNN}$ may be determined. According to a change of various training environments, the $JCT_{DNN}$ may increase according to the next training mode. In this case, the alternative training mode of the next training mode may be selected and the training of the NN may be performed in the alternative training mode, thereby preventing a deterioration in training efficiency.

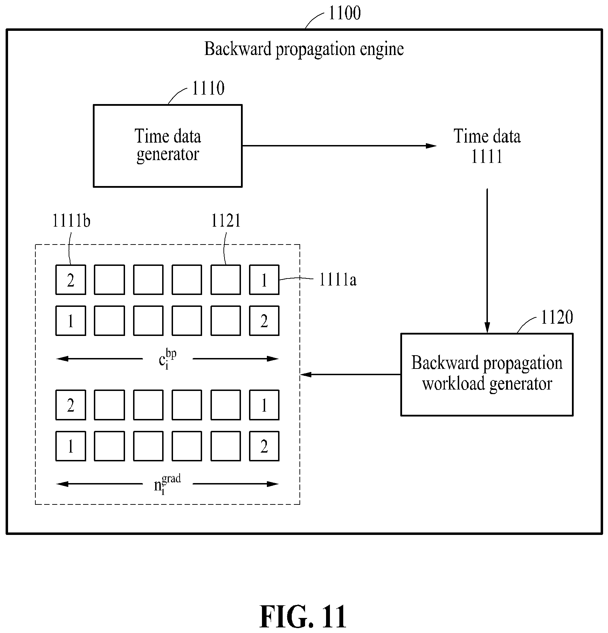

FIG. 11 illustrates an example of a distributed training process related to backward propagation. Referring to FIG. 11, a backward propagation engine 1100 may include a time data generator 1110 and a backward propagation workload generator 1120. The time data generator 1110 may receive information on a training mode selected by an update adjuster, and record an index of the corresponding training mode in time data 1111.

The backward propagation workload generator 1120 may generate workloads (e.g., a workload 1121) for backward propagation computation and gradient sharing. The backward propagation workload generator 1120 may record a generation start time at an operation start time of first time data 1111a, and record a generation completion time at an operation start time of second time data 1111b. A backward computation time $c_i^{bp}$ for backward propagation of an i-th layer may be determined based on time data (e.g., the first time data 1111a and the second time data 1111b) related to the workloads for the backward propagation computations and execution results of the corresponding workloads. In a similar manner, a gradient communication time $n_i^{grad}$ for the sharing of a layer gradient of the i-th layer may be determined.

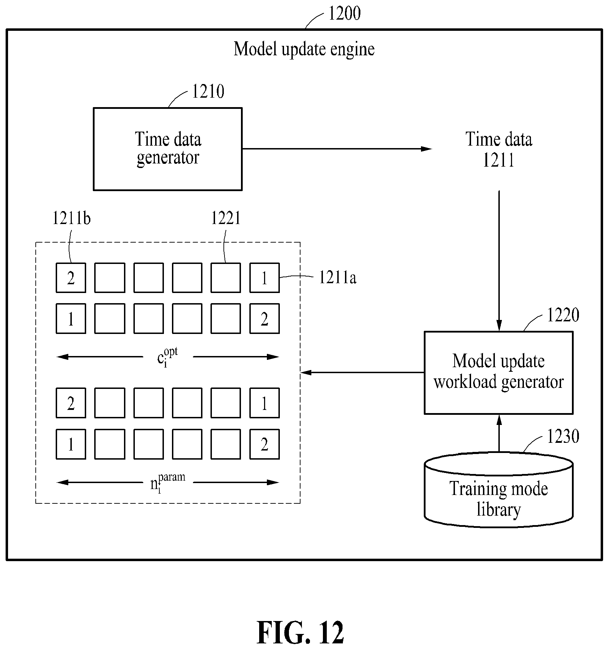

FIG. 12 illustrates an example of a distributed training process related to a model update engine. Referring to FIG. 12, a model update engine 1200 may include a time data generator 1210 and a model update workload generator 1220. The model update workload generator 1220 may receive information on a training mode selected by an update adjuster, and record an index of the corresponding training mode on time data 1211.

The model update workload generator 1220 may generate workloads (e.g., a workload 1221) for model update computation and parameter sharing corresponding to the corresponding training mode. A training mode library 1230 may store pre-structured source code to generate workloads for the model update computation and the parameter sharing of each training mode. The model update workload generator 1220 may generate workloads for the model update computation and the parameter sharing using the training mode library 1230.

The model update workload generator 1220 may record a generation start time at an operation start time of first time data 1211a, and record a generation completion time at an operation start time of second time data 1211b. A computation time $c_i^{opt}$ for model update of an i-th layer may be determined based on time data (e.g., the first time data 1211a and the second time data 1211b) related to the workloads for the model update computations and execution results of the corresponding workloads. In a similar manner, a communication time $n_i^{param}$ for the sharing of a model parameter of the i-th layer may be determined.

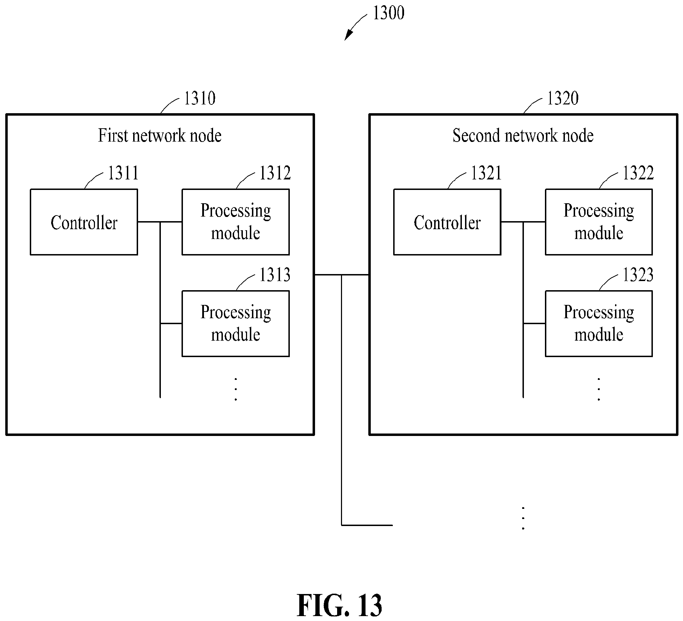

FIG. 13 illustrates an example of a distributed training structure of a plurality of network nodes. Referring to FIG. 13, a training apparatus 1300 may include a plurality of network nodes (e.g., a first network node 1310 and a second network node 1320) configured to train a NN. The first network node 1310 may include a controller 1311 and processing modules 1312 and 1313, and the second network node 1320 may include a controller 1321 and processing modules 1322 and 1323. The first network node 1310 and the second network node 1320 may train a NN while sharing synchronization data of a timetable.

The controller 1311 of the first network node 1310 may, while training a NN using a current training mode selected from a plurality of training modes for training of the NN, measure time data of a plurality of sub-operations for the training of the NN, based on the time data, determine a computation time to perform computation operations among the plurality of sub-operations and a communication time to perform communication operations among the plurality of sub-operations, based on a comparison result of the computation time and the communication time, select a next training mode from the plurality of training modes, and train the NN based on the next training mode. The processing modules 1312 and 1313 of the first network node 1310 may execute workloads corresponding to the plurality of sub-operations. The description of the controller 1311 and the processing modules 1312 and 1313 of the first network node 1310 may be applied to the controller 1321 and the processing modules 1322 and 1323 of the second network node 1320.

The plurality of network nodes may process repeated computation in a distributed manner when performing the distributed training according to examples. For example, in operation 1010 of FIG. 10, the update adjuster may determine each workload generation time of the controller and each workload execution completion time of the processing module for the backward propagation, the gradient sharing, the model update, and the parameter sharing with reference to the updated timetable. The plurality of network nodes may process, in a distributed manner, a job of obtaining the workload generation time and the workload execution completion time for the backward propagation, a job of obtaining the workload generation time and the workload execution completion time for the gradient sharing, a job of obtaining the workload generation time and the workload execution completion time for the model update, and a job of obtaining the workload generation time and the workload execution completion time for the parameter sharing. For example, the first network node 1310 may process the jobs related to the backward propagation and the gradient sharing, and the second network node 1320 may process the jobs related to the model update and the parameter sharing. The first network node 1310 and the second network node 1320 may share distributed processing results with each other. Since the plurality of network nodes have the same timetable, the distributed processing may be easily performed based on this.

In addition, the description provided with reference to FIGS. 1 to 12, 14, and 15 may be applied to the training apparatus 1300.

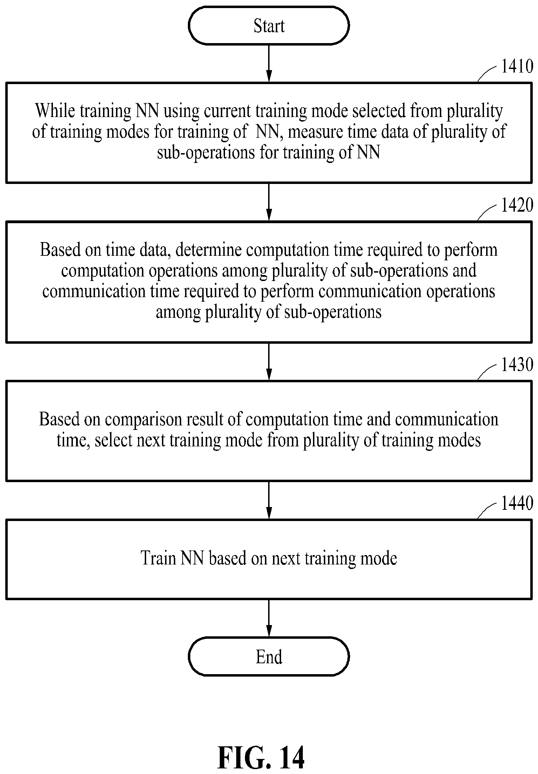

FIG. 14 illustrates an example of a distributed training method. Referring to FIG. 14, the training apparatus may, in operation 1410, while training an NN using a current training mode selected from a plurality of training modes for training of the NN, measure time data of a plurality of sub-operations for the training of the NN, in operation 1420, based on the time data, determine a computation time to perform computation operations among the plurality of sub-operations and a communication time to perform communication operations among the plurality of sub-operations, in operation 1430, based on a comparison result of the computation time and the communication time, select a next training mode from the plurality of training modes, and in operation 1440, train the NN based on the next training mode.

The plurality of training modes may be distinguished from each other according to an update range of the NN by each processing module used for the training of the NN.

The plurality of training modes may include at least one of a first training mode in which full update of a corresponding model of the NN is performed by each of processing modules used for the training of the NN, a second training mode in which partial update of 1/N of the corresponding model is performed by each of the processing modules, or a third training mode in which partial update of 1/M of the corresponding model is performed by each of the processing modules. The N may represent a number of the processing modules, and the M may represent an integer greater than 1 and smaller than the N.

The computation time and the communication time based on the time data may be obtained in a training process of a first layer group of the NN using the current training mode, a second layer group of the NN may be trained using the next training mode, and the first layer group may include at least a portion of at least one layer closer to a last layer of the NN than the second layer group.

The plurality of sub-operations may include at least one of a backward computation operation related to backward propagation, a gradient communication operation related to sharing of a layer gradient, an update computation operation related to model update, or a parameter communication operation related to sharing of a model parameter.

Operation 1420 may include, based on the time data, recording first temporary data of at least one of the backward computation operation, the gradient communication operation, the update computation operation, or the parameter communication operation in a timetable for each layer of the NN.

Operation 1420 may further include receiving second temporary data of at least one of a backward computation operation, a gradient communication operation, an update computation operation, or a parameter communication operation of a plurality of processing modules of another network node from the other network node participating distributed training of the NN, and updating the timetable based on a comparison result of the first temporary data and the second temporary data.

The time data may include a sub-operation type index, an operation start time, an operation completion time, and a training mode index.

The operation start time of the time data may include a start time of workload distribution for each sub-operation of a controller and a start time of workload execution for each sub-operation of the processing modules, and the operation completion time of the time data may include a completion time of the workload distribution for each sub-operation of the controller and a completion time of the workload execution for each sub-operation of the processing modules. An operation time of the controller and an operation time of the processing modules for each sub-operation may be distinguished based on the time data.

Operation 1430 may include, in response to a value of the computation time being larger among the computation time and the communication time, selecting the next training mode so that the value of the computation time decreases, and in response to the value of the computation time being larger among the computation time and the communication time, selecting the next training mode so that the value of the computation time increases.

The training apparatus may predict a change in total training time according to the next training mode based on dependency between computation operations and communication operations of a plurality of layers of the NN, and in response to the total training time increasing according to the next training mode, selecting an alternative training mode of the next training mode from the plurality of training modes.

In addition, the description provided with reference to FIGS. 1 to 13 and 15 may be applied to the distributed training method of FIG. 14.

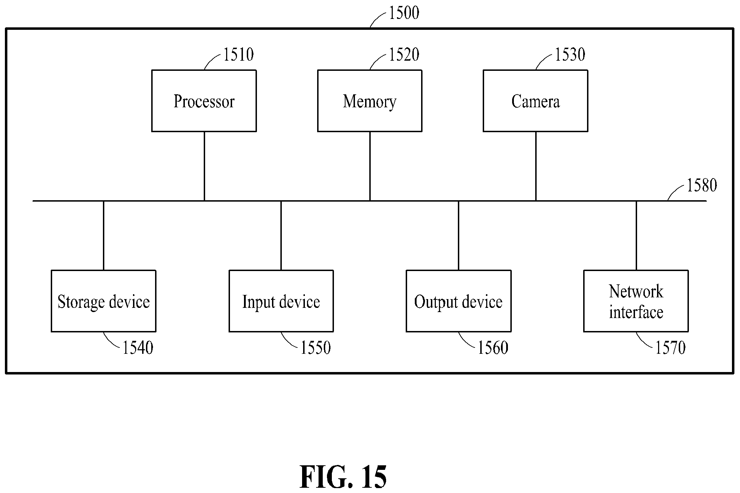

FIG. 15 illustrates an example of a configuration of an electronic device. Referring to FIG. 15, an electronic device 1500 may include a processor 1510 (e.g., one or more processors), a memory 1520 (e.g., one or more memories), a camera 1530, a storage device 1540, an input device 1550, an output device 1560, and a network interface 1570, and these components may communicate with one another through a communication bus 1580. For example, the electronic device 1500 may be implemented as at least a part of a mobile device such as a mobile phone, a smart phone, a personal digital assistant (PDA), a netbook, a tablet computer or a laptop computer, a wearable device such as a smart watch, a smart band or smart glasses, or a computing device such as a desktop or a server. The electronic device 1500 may include, structurally and/or functionally, the training apparatus 100 of FIG. 1 and the network nodes 1310 and 1320 of FIG. 13.

The processor 1510 may execute instructions and functions in the electronic device 1500. For example, the processor 1510 may process the instructions stored in the memory 1520 or the storage device 1540. The processor 1510 may perform one or more of the operations or methods described above with reference to FIGS. 1 to 14. The memory 1520 may include a non-transitory computer-readable storage medium or a non-transitory computer-readable storage device. The memory 1520 may store instructions that are to be executed by the processor 1510, and may also store information associated with software and/or applications when the software and/or applications are being executed by the electronic device 1500. In an example, the memory 1520 may be or include a non-transitory computer-readable storage medium storing instructions that, when executed by the processor 1510, configure the processor 1510 to perform any one, any combination, or all of operations and methods described herein with reference to FIGS. 1-14.

The camera 1530 may capture a photo and/or a video. The storage device 1540 may include a non-transitory computer-readable storage medium or a non-transitory computer-readable storage device. The storage device 1540 may store a greater amount of information than the memory 1520 and store the information for a long period of time. For example, the storage device 1540 may include a magnetic hard disk, an optical disk, a flash memory, a floppy disk, or other non-volatile memories known in the art.

The input device 1550 may receive an input from a user through a traditional input scheme using a keyboard and a mouse, and through a new input scheme such as a touch input, a voice input and an image input. The input device 1550 may include, for example, a keyboard, a mouse, a touchscreen, a microphone, and other devices that may detect an input from a user and transmit the detected input to the electronic device 1500. The output device 1560 may provide an output of the electronic device 1500 to a user through a visual, auditory, or tactile channel. The output device 1560 may include, for example, a display, a touch screen, a speaker, a vibration generator, or any other device that provides an output to a user. The network interface 1570 may communicate with an external device through a wired or wireless network.

The training apparatuses, controllers, processing modules, network nodes, NN execution engines, table generators, table adjusters, update adjusters, backward propagation engines, model update engines, time data generators, backward propagation workload generators, model update workload generators, first network nodes, second network nodes, electronic devices, processors, memories, cameras, storage devices, input devices, output devices, network interfaces, communication buses, training apparatus 100, controller 110, processing modules 121 to 122, network node 150, processing modules 311, 312, 313, and 314, training apparatus 600, controller 631, processing modules 641 and 642, NN execution engine 611, table generator 612, timetable 613, table adjuster 614, update adjuster 615, network node 670, backward propagation engine 711, model update engine 712, table generator 713, update adjuster 714, table adjuster 716, network node 717, processing module 740, table generator810, table adjuster 910, backward propagation engine 1100, time data generator 1110, backward propagation workload generator 1120, model update engine 1200, time data generator 1210, model update workload generator 1220, training apparatus 1300, first network node 1310, controller 1311, processing modules 1312 and 1313, second network node 1320, controller 1321, processing modules 1322 and 1323, electronic device 1500, processor 1510, memory 1520, camera 1530, storage device 1540, input device 1550, output device 1560, network interface 1570, communication bus 1580, and other apparatuses, devices, units, modules, and components disclosed and described herein with respect to FIGS. 1-15 are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-15 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the invention is defined by the claims.

**Claims**

1.   A processor-implemented method, the method comprising:

while training a neural network, NN, using a current training mode selected from a plurality of training modes for training of the NN, measuring time data of a plurality of sub-operations for the training of the NN;
based on the time data, determining a computation time to perform computation operations among the plurality of sub-operations and a communication time to perform communication operations among the plurality of sub-operations;
based on a comparison result of the computation time and the communication time, selecting a next training mode from the plurality of training modes; and
training the NN based on the next training mode.

2.   The method of claim 1, wherein the plurality of training modes are distinguished from each other according to an update range of the NN by each processing module used for the training of the NN.

3.   The method of claim 1 or 2,

wherein the plurality of training modes comprises any one or any combination of any two or more of:

a first training mode in which full update of a corresponding model of the NN is performed by each of processing modules used for the training of the NN;
a second training mode in which partial update of 1/N of the corresponding model is performed by each of the processing modules; and
a third training mode in which partial update of 1/M of the corresponding model is performed by each of the processing modules, and

wherein the N represents a total number of the processing modules, and the M represents an integer greater than 1 and smaller than the N.

4. The method of one of claims 1 to 3,

wherein the computation time and the communication time based on the time data are obtained in a training process of a first layer group of the NN using the current training mode,
wherein a second layer group of the NN is trained using the next training mode, and
wherein the first layer group comprises one or more portions of one or more layers closer to a last layer of the NN than the second layer group.

5. The method of one of claims 1 to 4, wherein the plurality of sub-operations comprises any one or any combination of any two or more of a backward computation operation related to backward propagation, a gradient communication operation related to sharing of a layer gradient, an update computation operation related to model update, and a parameter communication operation related to sharing of a model parameter.

6. The method of claim 5, wherein the determining of the computation time and the communication time comprises, based on the time data, recording first temporary data of any one or any combination of any two or more of the backward computation operation, the gradient communication operation, the update computation operation, and the parameter communication operation in a timetable for each layer of the NN.

7. The method of claim 6, wherein the determining of the computation time and the communication time further comprises:

receiving second temporary data of any one or any combination of any two or more of a backward computation operation, a gradient communication operation, an update computation operation, and a parameter communication operation of a plurality of processing modules of another network node from the other network node participating distributed training of the NN; and
updating the timetable based on a comparison result of the first temporary data and the second temporary data.

8. The method of claim 7, wherein the time data comprises a sub-operation type index, an operation start time, an operation completion time, and a training mode index.

9. The method of claim 8,

wherein the operation start time of the time data comprises a start time of workload distribution for each sub-operation of a controller and a start time of workload execution for each sub-operation of processing modules,
wherein the operation completion time of the time data comprises a completion time of the workload distribution for each sub-operation of the controller and a completion time of the workload execution for each sub-operation of the processing modules, and
wherein an operation time of the controller and an operation time of the processing modules for each sub-operation are distinguished based on the time data.

10. The method of one of claims 1 to 9, wherein the selecting of the next training mode comprises:

in response to a value of the computation time being larger among the computation time and the communication time, selecting the next training mode such that the value of the computation time decreases; and
in response to the value of the computation time being larger among the computation time and the communication time, selecting the next training mode such that the value of the computation time increases.

11. The method of one of claims 1 to 10, further comprising:

predicting a change in total training time according to the next training mode based on dependency between computation operations and communication operations of a plurality of layers of the NN; and
in response to the total training time increasing according to the next training mode, selecting an alternative training mode of the next training mode from the plurality of training modes.

12. A non-transitory computer-readable storage medium storing instructions that, when executed by one or more processors, configure the one or more processors to perform the method of one of claims 1 to 11.

13. An apparatus comprising:

a controller configured to operate according to one of claims 1 to 11; and
processing modules configured to execute workloads corresponding to the plurality of sub-operations.

14. An apparatus comprising:

a first network node and a second network node configured to train a neural network (NN),
wherein the first network node comprises:

a controller configured to,

while training the NN using a current training mode selected from a plurality of training modes for training of the NN, measure time data of a plurality of sub-operations for the training of the NN,
based on the time data, determine a computation time to perform computation operations among the plurality of sub-operations and a communication time to perform communication operations among the plurality of sub-operations,
based on a comparison result of the computation time and the communication time, select a next training mode from the plurality of training modes, and
train the NN based on the next training mode; and

processing modules configured to execute workloads corresponding to the plurality of sub-operations.

15. The apparatus of claim 14, wherein, to select the next training mode, the controller is configured to:
in response to a value of the computation time being larger among the computation time and the communication time, select the next training mode so that the value of the computation time decreases; and
in response to the value of the computation time being larger among the computation time and the communication time, select the next training mode so that the value of the computation time increases.

**FIG. 1**

**FIG. 2**

```
    ┌─── 311                  ┌─── 321                    ┌─── 312                  ┌─── 322
┌──────────────┐         ┌──────────────┐           ┌──────────────┐         ┌──────────────┐
│              │         │ Corresponding│           │              │         │ Corresponding│
│              │ Computation│   model   │           │              │ Computation│   model   │
│  Processing  │────────▶│      ┌── 331 │           │  Processing  │────────▶│      ┌── 332 │
│   module     │         │ ┌──────────┐ │           │   module     │         │ ┌──────────┐ │
│              │         │ │  Update  │ │           │              │         │ │  Update  │ │
│              │         │ │  range   │ │           │              │         │ │  range   │ │
└──────────────┘         │ └──────────┘ │           └──────────────┘         │ └──────────┘ │
        │                └──────────────┘                   │                └──────────────┘
        │                         Share                     │
        │────────────────────────────────────────────────── │
        ▼                                                    ▼
    ┌─── 313                  ┌─── 323                    ┌─── 314                  ┌─── 324
┌──────────────┐         ┌──────────────┐           ┌──────────────┐         ┌──────────────┐
│              │         │ Corresponding│           │              │         │ Corresponding│
│              │ Computation│   model   │           │              │ Computation│   model   │
│  Processing  │────────▶│      ┌── 333 │           │  Processing  │────────▶│      ┌── 334 │
│   module     │         │ ┌──────────┐ │           │   module     │         │ ┌──────────┐ │
│              │         │ │  Update  │ │           │              │         │ │  Update  │ │
│              │         │ │  range   │ │           │              │         │ │  range   │ │
└──────────────┘         │ └──────────┘ │           └──────────────┘         │ └──────────┘ │
                         └──────────────┘                                    └──────────────┘
```

**FIG. 3A**

**FIG. 3B**

**FIG.3C**

FIG. 3D

FIG. 4

Computation
time
501

Communication
time
502

Dynamic control

500

Computational
resources
503

Communication
resources
504

**FIG. 5**

FIG. 6

**FIG. 7**

**FIG. 8**

EP 4 495 834 A1

911

913

$y_c$ | max | max | max | max

$y_s$ | max | max | max | max

$x_c$ | max | max | max | max

$x_s$ | max | max | max | max

$c_0^{opt}$ | $c_1^{opt}$ | $c_2^{opt}$ | $c_3^{opt}$

912

$y_c$ | max | max | max | max

$y_s$ | max | max | max | max

$x_c$ | max | max | max | max

$x_s$ | max | max | max | max

$c_0^{bp}$ | $c_1^{bp}$ | $c_2^{bp}$ | $c_3^{bp}$

915

$y_c$ | max | max | max | max

$y_s$ | max | max | max | max

$x_c$ | max | max | max | max

$x_s$ | max | max | max | max

$n_0^{param}$ | $n_1^{param}$ | $n_2^{param}$ | $n_3^{param}$

914

$y_c$ | max | max | max | max

$y_s$ | max | max | max | max

$x_c$ | max | max | max | max

$x_s$ | max | max | max | max

$n_0^{grad}$ | $n_1^{grad}$ | $n_2^{grad}$ | $n_3^{grad}$

910

Table adjuster

Synchronization data 901

**FIG. 9**

Start

1010

Determine operation times of control unit and each processing unit

1020

Determine each of computation time and communication time

1030

Adjust computation time and/or communication time

End

**FIG. 10**

1100

Backward propagation engine

1110

Time data
generator

Time data
1111

1111b          1121

2 $\square$ $\square$ $\square$ $\square$ 1    1111a

1 $\square$ $\square$ $\square$ $\square$ 2

$\longleftarrow \quad c_i^{bp} \quad \longrightarrow$

2 $\square$ $\square$ $\square$ $\square$ 1

1 $\square$ $\square$ $\square$ $\square$ 2

$\longleftarrow \quad n_i^{grad} \quad \longrightarrow$

1120

Backward propagation
workload generator

**FIG. 11**

1200

Model update engine

1210

Time data generator

Time data 1211

1211b          1221

$$2 \quad \square \quad \square \quad \square \quad \square \quad 1 \quad \text{—} \, 1211a$$

$$1 \quad \square \quad \square \quad \square \quad \square \quad 2$$

$$\longleftarrow \quad c_i^{opt} \quad \longrightarrow$$

$$2 \quad \square \quad \square \quad \square \quad \square \quad 1$$

$$1 \quad \square \quad \square \quad \square \quad \square \quad 2$$

$$\longleftarrow \quad n_i^{param} \quad \longrightarrow$$

1220

Model update workload generator

1230

Training mode library

FIG. 12

1300

| 1310 First network node | | 1320 Second network node | |
|---|---|---|---|
| 1311 Controller | 1312 Processing module | 1321 Controller | 1322 Processing module |
| | 1313 Processing module | | 1323 Processing module |

**FIG. 13**

Start

1410

While training NN using current training mode selected from plurality of training modes for training of NN, measure time data of plurality of sub-operations for training of NN

1420

Based on time data, determine computation time required to perform computation operations among plurality of sub-operations and communication time required to perform communication operations among plurality of sub-operations

1430

Based on comparison result of computation time and communication time, select next training mode from plurality of training modes

1440

Train NN based on next training mode

End

**FIG. 14**

FIG. 15

## EUROPEAN SEARCH REPORT

Application Number

EP 24 15 2756

Europäisches Patentamt
European Patent Office
Office européen des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 879 529 A (UNIV SHANGHAI JIAOTONG; SHANGHAI QIZHI RES INSTITUTE) 31 March 2023 (2023-03-31) * claims 1, 2, 3, 5, 8, 9 * | 1-15 | INV. G06N3/098 G06N3/084 |
| A | YI XIAODONG XDYI@CS HKU HK ET AL: "Fast Training of Deep Learning Models over Multiple GPUs", PROCEEDINGS OF THE 23RD ACM/IEEE INTERNATIONAL CONFERENCE ON MODEL DRIVEN ENGINEERING LANGUAGES AND SYSTEMS: COMPANION PROCEEDINGS, ACMPUB27, NEW YORK, NY, USA, 7 December 2020 (2020-12-07), pages 105-118, XP058742402, DOI: 10.1145/3423211.3425675 ISBN: 978-1-4503-8194-9 * the whole document * | 1-15 | |
| A | SAYED HADI HASHEMI ET AL: "Caramel: Accelerating Decentralized Distributed Deep Learning with Computation Scheduling", ARXIV.ORG, CORNELL UNIVERSITY LIBRARY, 201 OLIN LIBRARY CORNELL UNIVERSITY ITHACA, NY 14853, 29 April 2020 (2020-04-29), XP081654740, * the whole document * | 1-15 | TECHNICAL FIELDS SEARCHED (IPC)  G06N |

The present search report has been drawn up for all claims

| Place of search | Date of completion of the search | Examiner |
|---|---|---|
| The Hague | 16 July 2024 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 2756

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2024

| Patent document cited in search report | Publication date | Patent family member(s) | Publication date |
|---|---|---|---|
| CN 115879529 A | 31-03-2023 | NONE | |

For more details about this annex : see Official Journal of the European Patent Office, No. 12/82